# EUROPEAN PATENT APPLICATION

(11) **EP 3 541 049 A1**
(43) Date of publication of application: **18.09.2019**
(21) Application number: 17883349.7
(22) Date of filing: 19.12.2017
(51) Int. Cl.: H04L 29/08, H04N 21/643, H04L 29/06, H04N 21/24, H04N 21/845

(54) **METHOD AND APPARATUS FOR PROCESSING VIDEO SERVICE**

(30) Priority: 22.12.2016 CN 201611200457
(71) Applicant: Huawei Technologies Co., Ltd., Longgang District Shenzhen, Guangdong 518129 (CN)
(72) Inventor: WANG, Peng, Shenzhen, Guangdong 518129 (CN); LAN, Yu, Shenzhen, Guangdong 518129 (CN); LIN, Gaoquan, Shenzhen, Guangdong 518129 (CN)
(74) Representative: Epping - Hermann - Fischer
(86) International application number: PCT/CN2017/117200
(87) International publication number: WO 2018/113667

(57) **Abstract**

Embodiments of this application provide a video service processing method and apparatus, so as to recognize an audio/video slice, transmitted based on the QUIC protocol, of a video service. The method includes: receiving, by a first device, a plurality of data blocks of a first video service that are sent by a server based on a plurality of uplink request messages from a client, where the plurality of uplink request messages include at least two groups of uplink request messages; determining, by the first device, a quantity of data blocks received between a first group of uplink request messages and a second group of uplink request messages that is adjacent to the first group of uplink request messages in the at least two groups of uplink request messages; and if one data block is received between the first group of uplink request messages and the second group of uplink request messages, determining, by the first device, the data block received between the first group of uplink request messages and the second group of uplink request messages as an audio/video slice.

## Description

This application claims priority to Chinese Patent Application No. 201611200457.2, filed with the China National Intellectual Property Administration on December 22, 2016 and entitled "VIDEO SERVICE PROCESSING METHOD AND APPARATUS", which is incorporated herein by reference in its entirety.

### TECHNICAL FIELD

Embodiments of this application relate to the communications field, and more specifically, to a video service processing method and apparatus.

### BACKGROUND

With continuous development of a mobile broadband (mobile broadband, MBB) network, a focus of a mobile service has shifted from a voice service to a data service. A video service accounts for a largest proportion of the data service, and is widely defined as a basic service by major global mobile operators. Currently, most on-demand videos are transmitted by using the Transmission Control Protocol (transport control protocol, TCP), but TCP has disadvantages such as a long delay during initial interaction and mandatory waiting in a case of a transmission error. Therefore, Google (google) Inc. has launched a new protocol that is based on User Datagram Protocol (user datagram protocol, UDP) transmission, that is, the Quick UDP Internet Connection (quick UDP internet connection, QUIC) protocol, and the QUIC protocol has advantages such as a zero round-trip delay (round-trip time, RTT), forward error correction, and multiplexing. Due to the advantages of the QUIC protocol, video transmission based on the QUIC protocol has become a current research hotspot.

During a process of shifting from the voice service to the data service, a focus of an operator also shifts from a key performance indicator (key performance indicator, KPI) of network quality to a key quality indicator (key quality indicator, KQI) of user experience. A video service is a cash flow of a mobile operator, and therefore video service experience is most important. A video bit rate determines quality of a video source, and also determines a video playback waiting time and video freezing. Recognition of the video bit rate requires recognition of both audio and video slices.

All existing video service processing methods are used for a video service that uses TCP transmission. In the TCP protocol, audio slices are corresponding to one data stream, and video slices are corresponding to another data stream, whereas in the QUIC protocol, audio and video slices are mixed in a data stream for transmission, and the existing methods cannot recognize an audio/video slice in the data stream. Therefore, recognizing an audio/video slice, transmitted by using the QUIC protocol, of a video service is an urgent problem to be resolved.

### SUMMARY

In view of this, embodiments of this application provide a video service processing method and apparatus, so as to recognize an audio/video slice that is transmitted based on the QUIC protocol.

According to a first aspect, a video service processing method is provided, including: receiving, by a first device, a plurality of data blocks of a first video service that are sent by a server based on a plurality of uplink request messages from a client, where the plurality of uplink request messages are used for requesting the first video service, the plurality of uplink request messages include at least two groups of uplink request messages, and each of the at least two groups of uplink request messages includes two consecutively sent uplink request messages;
determining, by the first device, a quantity of data blocks received between a first group of uplink request messages and a second group of uplink request messages that is adjacent to the first group of uplink request messages in the at least two groups of uplink request messages; and
if one data block is received between the first group of uplink request messages and the second group of uplink request messages, determining, by the first device, the data block received between the first group of uplink request messages and the second group of uplink request messages as an audio/video slice.

In this embodiment of this application, the client may obtain the plurality of data blocks of the first video service by using the plurality of uplink request messages. The plurality of uplink request messages include at least two groups of uplink request messages. The first device may determine an audio/video slice based on the quantity of the data blocks received between the first group of uplink request messages and the second group of uplink request messages in the at least two groups of uplink request messages. Specifically, if there is only one data block between the first group of uplink request messages and the second group of uplink request messages, the first device may determine the data block as an audio/video slice.

Therefore, according to the video service processing method in this embodiment of this application, an audio/video slice is determined based on the quantity of the data blocks received between the first group of uplink request messages and the second group of uplink request messages in the at least two groups of uplink request messages, thereby recognizing an audio/video slice that is transmitted based on the QUIC protocol, and improving efficiency in recognizing an audio/video slice.

In a first possible implementation of the first aspect, if there are at least two data blocks between the first group of uplink request messages and the second group of uplink request messages, the first device determines at least one audio/video slice based on a size of each of the at least two data blocks between the first group of uplink request messages and the second group of uplink request messages.

Specifically, when there are at least two data blocks between the first group of uplink request messages and the second group of uplink request messages, the first device needs to determine the size of each of the at least two data blocks, and then determines at least one audio/video slice based on the size of each of the at least two data blocks.

With reference to the foregoing possible implementation of the first aspect, in a second possible implementation of the first aspect, the determining, by the first device, at least one audio/video slice based on sizes of the at least two data blocks received between the first group of uplink request messages and the second group of uplink request messages includes:
combining, by the first device, every two adjacent data blocks of all or some adjacent data blocks of the at least two data blocks sequentially based on a size of each of the at least two data blocks, to obtain at least one combined data block; and
determining, by the first device, the at least one combined data block as the at least one audio/video slice.

Specifically, the first device may combine every two adjacent data blocks of all or some adjacent data blocks of the plurality of data blocks based on a size of each of the plurality of data blocks. In a combining process, the first device may first combine, in a chronological order of receiving the plurality of data blocks, a first data block with a second data block that is immediately adjacent to the first data block, then combine a third data block with a fourth data block that is immediately adjacent to the third data block, and so on, until combining performed on the plurality of data blocks is complete. However, this embodiment of this application is not limited thereto.

With reference to the foregoing possible implementation of the first aspect, in a third possible implementation of the first aspect, the combining, by the first device, every two adjacent data blocks of all or some adjacent data blocks of the plurality of data blocks sequentially based on a size of each of the at least two data blocks includes:
when a size of a first data block of the at least two data blocks is greater than a first threshold and a size of a second data block that is adjacent to the first data block and that is of the at least two data blocks is less than or equal to the first threshold, combining, by the first device, the first data block and the second data block.

With reference to the foregoing possible implementation of the first aspect, in a fourth possible implementation of the first aspect, the method further includes:
when both the sizes of the first data block and the second data block are less than or equal to the first threshold, determining, by the first device, a size of a third data block that immediately follows the first data block and the second data block and that is of the at least two data blocks; and
when the size of the third data block is greater than the first threshold, combining, by the first device, the second data block and the third data block.

The third data block is a data block received by the first device after the first device receives the first data block and the second data block. It should be understood that a principle used by the first device for combining is combining a large data block with a small data block. For two adjacent data blocks whose sizes are both greater than the first threshold, the first device may directly determine the first data block as an audio/video slice, and when the size of the third data block that is immediately adjacent to the second data block is less than or equal to the first threshold, the first device may combine the second data block and the third data block. For two adjacent data blocks whose sizes are both less than or equal to the first threshold, the first device may directly ignore the first data block, and when the size of the third data block that is immediately adjacent to the second data block is greater than the first threshold, the first device may combine the second data block and the third data block.

It should be further understood that because audio and video slices of the first video service are received in a sending order of the plurality of uplink request messages, a receiving order of the plurality of data blocks represents a playback order of the first video service. Therefore, when a combining operation is performed, only adjacent data blocks can be combined, to ensure orderliness of recognized audio and video slices and integrity of the entire first video service.

Optionally, after at least one audio/video slice is determined by performing a combining operation, an average value of sizes of all audio and video slices directly determined based on two groups of uplink request messages may be calculated, and then a size of an audio/video slice obtained through combining may be corrected by using the average value. However, this embodiment of this application is not limited thereto.

With reference to the foregoing possible implementation of the first aspect, in a fifth possible implementation of the first aspect, the method further includes:
when both the sizes of the first data block and the second data block are greater than the first threshold, determining, by the first device, the first data block as an audio/video slice.

With reference to the foregoing possible implementation of the first aspect, in a sixth possible implementation of the first aspect, before the determining, by the first device, a quantity of data blocks received between a first group of uplink request messages and a second group of uplink request messages in the at least two groups of uplink request messages, the method further includes:
determining, by the first device, whether an audio and a video of the first video service are separated; and
the determining, by the first device, a quantity of data blocks received between a first group of uplink request messages and a second group of uplink request messages in the at least two groups of uplink request messages includes:
   when the audio and the video of the first video service are separated, determining, by the first device, the quantity of the data blocks received between the first group of uplink request messages and the second group of uplink request messages in the at least two groups of uplink request messages.

Specifically, the first device may first determine whether the audio and the video of the first video service are separated, and when the audio and the video of the first video service are separated, the first device determines the quantity of the data blocks between the first group of uplink request messages and the second group of uplink request messages. It should be understood that when the audio and the video are not separated, there is definitely a data block between every two uplink request messages, and there is no group of uplink request messages. Therefore, the first device may directly determine the data block received between every two uplink request messages as an audio/video slice.

With reference to the foregoing possible implementation of the first aspect, in a seventh possible implementation of the first aspect, the method further includes:
when the audio and the video of the first video service are not separated, determining, by the first device, a data block received between every two adjacent uplink request messages in the plurality of uplink request messages as an audio/video slice.

With reference to the foregoing possible implementation of the first aspect, in an eighth possible implementation of the first aspect, the determining, by the first device, whether an audio and a video of the first video service are separated includes:
determining, by the first device, whether at least two consecutively sent uplink request messages exist in the plurality of uplink request messages; and
if determining that at least two consecutively sent uplink request messages exist in the plurality of uplink request messages, determining, by the first device, that the audio and the video of the first video service are separated; or
if determining that at least two consecutively sent uplink request messages do not exist in the plurality of uplink request messages, determining, by the first device, that the audio and the video of the first video service are not separated.

Specifically, the first device may determine, based on whether at least two consecutively sent uplink request messages exist in the plurality of uplink request messages, whether the audio and the video of the first video service are separated. The first device may determine, in a plurality of manners, whether at least two consecutively sent uplink request messages exist in the plurality of uplink request messages. For example, the first device may determine, based on whether same fields of the plurality of uplink request messages are continuous, whether at least two consecutively sent uplink request messages exist. However, this embodiment of this application is not limited thereto.

With reference to the foregoing possible implementation of the first aspect, in a ninth possible implementation of the first aspect, the determining, by the first device, whether at least two consecutively sent uplink request messages exist in the plurality of uplink request messages includes:
obtaining, by the first device, a first field in each of the plurality of uplink request messages, where the first field is used to identify the uplink request message; and
if at least two uplink request messages whose first fields are continuous exist in the plurality of uplink request messages, determining, by the first device, that at least two consecutively sent uplink request messages exist in the plurality of uplink request messages; or
if at least two uplink request messages whose first fields are continuous do not exist in the plurality of uplink request messages, determining, by the first device, that at least two consecutively sent uplink request messages do not exist in the plurality of uplink request messages.

It should be understood that any field that can play a role of identification can be used to determine whether uplink request messages are consecutively sent. In an implementation, the first field may be an ID field in an IP header or a SeqNo field in a QUIC header. This embodiment of this application is not limited thereto.

With reference to the foregoing possible implementation of the first aspect, in a tenth possible implementation of the first aspect, the method further includes:
determining, by the first device, a size of a first data block that is in the plurality of data blocks and that is corresponding to a first uplink request message in the plurality of uplink request messages;
when the audio and the video of the first video service are separated, if the size of the first data block is less than a second threshold, determining, by the first device, a size of a second data block that is in the plurality of data blocks and that is corresponding to a second uplink request message in the plurality of uplink request messages; and
if the size of the second data block is less than the second threshold, determining, by the first device, a third data block that is in the plurality of data blocks and that is corresponding to a third uplink request message in the plurality of uplink request messages as an initial audio/video slice.

With reference to the foregoing possible implementation of the first aspect, in an eleventh possible implementation of the first aspect, the method further includes:
if the size of the second data block is greater than or equal to the second threshold, determining, by the first device, the second data block as an initial audio/video slice.

With reference to the foregoing possible implementation of the first aspect, in a twelfth possible implementation of the first aspect, the method further includes:
if the size of the first data block is greater than or equal to the second threshold, determining, by the first device, the first data block as an initial audio/video slice.

With reference to the foregoing possible implementation of the first aspect, in a thirteenth possible implementation of the first aspect, the method further includes:
when the audio and the video of the first video service are not separated, if the size of the first data block is less than the second threshold, determining, by the first device, the second data block as an initial audio/video slice.

It should be understood that the foregoing method mainly aims to filter out an index slice other than an audio/video slice. The index slice includes related index information of the first video service, and there is an obvious difference between sizes of the index slice and the audio/video slice. Therefore, in this embodiment of this application, the initial audio/video slice can be recognized through threshold setting.

Optionally, the method further includes:
determining, by the first device, playable duration of the audio/video slice based on a duration regularity of audio/video slices of the first video service; and
calculating, by the first device, a slice bit rate of the audio/video slice based on the playable duration of the audio/video slice and a size of the audio/video slice.

Specifically, after recognizing an audio/video slice, the first device can calculate a slice bit rate of the audio/video slice. The first device may perform reverse mapping by using a duration model, to obtain playable duration of the audio/video slice, and then divide a size of the audio/video slice by the playable duration of the audio/video slice, to obtain the slice bit rate.

With reference to the foregoing possible implementation of the first aspect, in a fourteenth possible implementation of the first aspect, the method further includes:
after the first device obtains all audio/video slices of the first video service, determining, by the first device, a service-level bit rate of the first video service.

With reference to the foregoing possible implementation of the first aspect, in a fifteenth possible implementation of the first aspect, the determining, by the first device, a service-level bit rate of the first video service includes:
determining, by the first device, traffic change rates and rate change rates of all the audio/video slices of the first video service;
when a traffic change rate of a first audio/video slice of the first video service is greater than a third threshold and a rate change rate of the first audio/video slice is greater than a fourth threshold, determining, by the first device, the first audio/video slice as a retransmitted slice; and
determining, by the first device, the service-level bit rate of the first video service based on remaining audio/video slices of all the audio/video slices other than the first audio/video slice.

Specifically, after recognizing all the audio/video slices of the first video service, the first device may calculate the service-level bit rate of the first video service. Before calculating the service-level bit rate, the first device may screen out and filter out the retransmitted slice based on a traffic change rate and a rate change rate of each audio/video slice, and then calculate the service-level bit rate based on remaining audio/video slices of all the audio/video slices other than the first audio/video slice.

It should be understood that a service-level bit rate is an overall bit rate of a video service, and the service-level bit rate is a result of a summarization process. After a duplicate slice is removed, sizes and duration of non-duplicate slices are accumulated, and then an accumulated size is divided by duration, to obtain a service-level bit rate.

According to a second aspect, a video service processing apparatus is provided, and is configured to perform the method in the first aspect or any possible implementation of the first aspect.

Specifically, the apparatus includes a unit that is configured to perform the method in the first aspect or any possible implementation of the first aspect.

According to a third aspect, a video service processing apparatus is provided. The apparatus includes a transceiver, a memory, and a processor. The transceiver, the memory, and the processor communicate with each other by using an internal connection channel. The memory is configured to store an instruction. The processor is configured to execute the instruction stored in the memory, to control a receiver to receive a signal and to control a transmitter to send a signal. In addition, when the processor executes the instruction stored in the memory, the processor is enabled to perform the method in the first aspect or any possible implementation of the first aspect.

According to a fourth aspect, a video service processing system is provided. The system includes a client, a server, and the apparatus in the second aspect or any possible implementation of the second aspect; or
the system includes a client, a server, and the apparatus in the third aspect or any possible implementation of the third aspect.

According to a fifth aspect, a computer readable medium is provided, and is configured to store a computer program. The computer program includes an instruction that is used to perform the method in the first aspect or any possible implementation of the first aspect.

According to a sixth aspect, a computer program product is provided, including computer program code. When the computer program code is run by a computer, the computer performs the method in the first aspect or any possible implementation of the first aspect.

According to a seventh aspect, a chip is provided, including an input interface, an output interface, at least one processor, and a memory. The input interface, the output interface, the processor, and the memory are connected by using an internal channel. The processor is configured to execute code in the memory. When the code is executed, the processor is configured to perform the method in the first aspect or any possible implementation of the first aspect.

### BRIEF DESCRIPTION OF DRAWINGS

FIG. 1 is a schematic diagram of a communications system applied to an embodiment of this application;
FIG. 2 is a schematic flowchart of a video service processing method according to an embodiment of this application;
FIG. 3 is a schematic flowchart of another video service processing method according to an embodiment of this application;
FIG. 4 is a schematic flowchart of another video service processing method according to an embodiment of this application;
FIG. 5 is a schematic flowchart of another video service processing method according to an embodiment of this application;
FIG. 6 is a schematic block diagram of a video service processing apparatus according to an embodiment of this application; and
FIG. 7 is a schematic block diagram of another video service processing apparatus according to an embodiment of this application.

### DESCRIPTION OF EMBODIMENTS

The following describes technical solutions in the embodiments of this application with reference to the accompanying drawings in the embodiments of this application.

It should be understood that, the technical solutions in the embodiments of this application may be applied to various communications systems, such as: a Global System for Mobile Communications (global system for mobile communication, GSM) system, a Code Division Multiple Access (code division multiple access, CDMA) system, a Wideband Code Division Multiple Access (wideband code division multiple access, WCDMA) system, a general packet radio service (general packet radio service, GPRS), a Long Term Evolution (long term evolution, LTE) system, an LTE Frequency Division Duplex (frequency division duplex, FDD) system, an LTE Time Division Duplex (time division duplex, TDD), a Universal Mobile Telecommunications System (universal mobile telecommunication system, UMTS), a Worldwide Interoperability for Microwave Access (worldwide interoperability for microwave access, WiMAX) communications system, and a future 5G communications system.

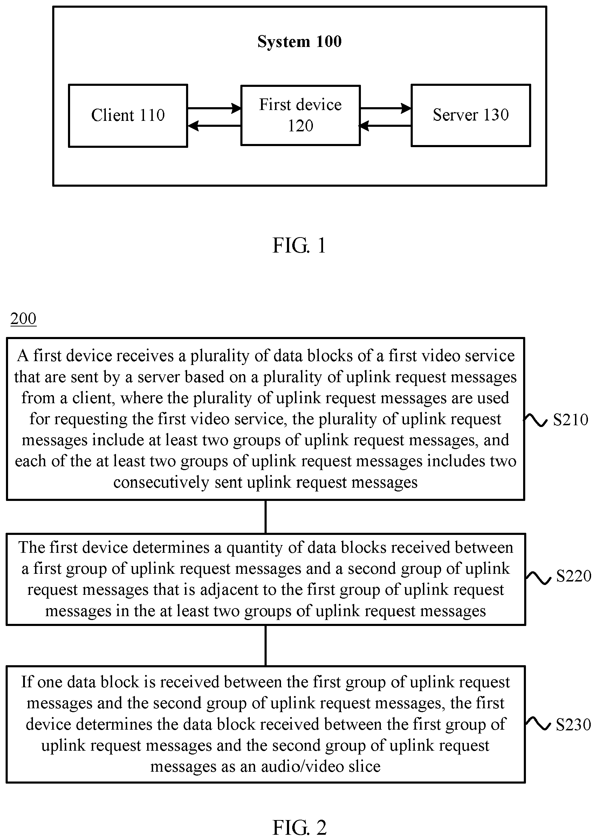

FIG. 1 is a schematic diagram of a system 100 according to an embodiment of this application. The system 100 includes a client 110, at least one first device 120, and a server 130. When the client 110 needs to obtain a video service, the client 110 may send a plurality of uplink request messages sequentially to the server 130 through the first device 120 to request the video service.

Specifically, the plurality of uplink request messages are sent serially. One uplink request message is used to request an audio slice or a video slice. After receiving an uplink request message sent by the client 110, the first device 120 forwards the uplink request message to the server 130. The server 130 sends a corresponding data block of the video service to the first device 120 based on the uplink request message. The data block includes an audio slice and a video slice of the video service that the client 120 needs to obtain. The first device 120 then forwards the data block to the client 110. It should be understood that the client 110 consecutively sends uplink request messages, until all audio and video slices of the video service are received.

It should be understood that from a perspective of the first device, the first device can only receive a data block sent by the client, and cannot distinguish between a video service and an audio service in the data block. In the foregoing procedure, the first device 120 is only used as an intermediate forwarding node. In addition to forwarding the uplink request message and the corresponding data block, the first device needs to process the video service and recognize the audio slice and the video slice in the data block. Further, the first device may calculate an initial buffering delay of the video service, a freezing delay and a freezing position of the video service in a playback process, and resolution of the video service, so as to help obtain video resolution distribution of a live network.

All existing video service processing methods are used for a video service that uses TCP transmission. In the TCP protocol, when an audio and a video are separated, audio slices are corresponding to one data stream, that is, an audio data stream, and video slices are corresponding to another data stream, that is, a video data stream. For the video service that uses TCP transmission, the first device may determine an audio/video slice based on a data block that is in a data stream and that is received between every two uplink request messages, and then distinguish between an audio slice and a video slice based on a size of the audio/video slice. However, in the QUIC protocol, audio and video slices are mixed in a data stream for transmission, and the existing methods cannot recognize an audio/video slice in the data stream.

FIG. 2 is a schematic flowchart of a video service processing method 200 according to an embodiment of this application. The method 200 may be applied to a system 100 shown in FIG. 1, but this embodiment of this application is not limited thereto.

S210. A first device receives a plurality of data blocks of a first video service that are sent by a server based on a plurality of uplink request messages from a client, where the plurality of uplink request messages are used for requesting the first video service, the plurality of uplink request messages include at least two groups of uplink request messages, and each of the at least two groups of uplink request messages includes two consecutively sent uplink request messages.

S220. The first device determines a quantity of data blocks received between a first group of uplink request messages and a second group of uplink request messages that is adjacent to the first group of uplink request messages in the at least two groups of uplink request messages.

S230. If one data block is received between the first group of uplink request messages and the second group of uplink request messages, the first device determines the data block received between the first group of uplink request messages and the second group of uplink request messages as an audio/video slice.

Specifically, when an audio and a video are not separated, the client sends the plurality of uplink request messages to the first device sequentially. The plurality of uplink request messages are used for requesting all audio and video slices of the first video service. After receiving an uplink request message, the first device forwards the uplink request message to the server. The server sends an audio slice or a video slice to the first device based on the uplink request message. The first device sends the audio slice or the video slice to the client. The client then sends a next uplink request message. When an audio and a video are separated, the client may send two uplink request messages to the first device consecutively. One uplink request message is used for requesting an audio slice and the other uplink request message is used for requesting a video slice. In this specification, two consecutively sent uplink request messages are referred to as a group of uplink request messages. In addition, when an audio and a video are separated, the client may alternatively first send an uplink request message, and then send a next uplink request message after receiving a data block that includes an audio slice or a video slice. Therefore, after receiving the data block sent by the server, the first device may determine, based on uplink request messages received before and after the data block, whether the data block is an audio/video slice.

In this embodiment of this application, the client may obtain the plurality of data blocks of the first video service by using the plurality of uplink request messages. The plurality of uplink request messages include at least two groups of uplink request messages. The first device may determine an audio/video slice based on the quantity of the data blocks received between the first group of uplink request messages and the second group of uplink request messages in the at least two groups of uplink request messages. Specifically, if there is only one data block between the first group of uplink request messages and the second group of uplink request messages, the first device may determine the data block as an audio/video slice.

Therefore, according to the video service processing method in this embodiment of this application, an audio/video slice is determined based on the quantity of the data blocks received between the first group of uplink request messages and the second group of uplink request messages in the at least two groups of uplink request messages, thereby recognizing an audio/video slice that is transmitted based on the QUIC protocol, and improving efficiency in recognizing an audio/video slice.

In an optional embodiment, the method further includes:
if at least two data blocks are received between the first group of uplink request messages and the second group of uplink request messages, determining, by the first device, at least one audio/video slice based on sizes of the at least two data blocks received between the first group of uplink request messages and the second group of uplink request messages.

Specifically, when at least two data blocks are received between the first group of uplink request messages and the second group of uplink request messages, the first device needs to determine a size of each of the at least two data blocks, and then determines at least one audio/video slice based on the size of each of the at least two data blocks.

In an optional embodiment, the determining, by the first device, at least one audio/video slice based on sizes of the at least two data blocks received between the first group of uplink request messages and the second group of uplink request messages includes:
combining, by the first device, every two adjacent data blocks of all or some adjacent data blocks of the at least two data blocks sequentially based on a size of each of the at least two data blocks, to obtain at least one combined data block; and
determining, by the first device, the at least one combined data block as the at least one audio/video slice.

Specifically, the first device may combine every two adjacent data blocks of all or some adjacent data blocks of the at least two data blocks based on the size of each of the at least two data blocks. In a combining process, the first device may first combine, in a receiving order of the at least two data blocks, a first data block with a second data block that is immediately adjacent to the first data block, then combine a third data block with a fourth data block that is immediately adjacent to the third data block, and so on, until combining performed on the at least two data blocks is complete. However, this embodiment of this application is not limited thereto.

In an optional embodiment, the combining, by the first device, every two adjacent data blocks of all or some adjacent data blocks of the at least two data blocks sequentially based on a size of each of the at least two data blocks includes:
when a size of a first data block of the at least two data blocks is greater than a first threshold and a size of a second data block that is adjacent to the first data block and that is of the at least two data blocks is less than or equal to the first threshold, combining, by the first device, the first data block and the second data block.

In an optional embodiment, the method further includes:
when both the sizes of the first data block and the second data block are less than or equal to the first threshold, determining, by the first device, a size of a third data block that immediately follows the first data block and the second data block and that is of the at least two data blocks; and
when the size of the third data block is greater than the first threshold, combining, by the first device, the second data block and the third data block.

In an optional embodiment, the method further includes:
when both the sizes of the first data block and the second data block are greater than the first threshold, determining, by the first device, the first data block as an audio/video slice.

It should be understood that a principle used by the first device for combining is combining a large data block with a small data block. Therefore, when the size of the first data block is greater than the first threshold and the size of the second data block is less than or equal to the first threshold, the first device may combine the first data block and the second data block. Alternatively, when the size of the first data block is less than or equal to the first threshold and the size of the second data block is greater than the first threshold, the first device may also combine the first data block and the second data block. If both the sizes of the first data block and the second data block are greater than the first threshold, the first device may not perform a combining operation, may directly determine the first data block as an audio/video slice, and further determine whether the size of the third data block that is immediately adjacent to the second data block is greater than the first threshold. If the size of the third data block is less than or equal to the first threshold, the first device may combine the second data block and the third data block. If both the sizes of the first data block and the second data block are less than or equal to the first threshold, the first device may not perform a combining operation, may directly ignore the first data block, and further determine whether the size of the third data block that is immediately adjacent to the second data block is greater than the first threshold. If the size of the third data block is greater than the first threshold, the first device may combine the second data block and the third data block.

It should be further understood that because audio and video slices of the first video service are received in a sending order of the plurality of uplink request messages, a receiving order of the plurality of data blocks represents a playback order of the first video service. Therefore, when a combining operation is performed, only adjacent data blocks can be combined, to ensure orderliness of recognized audio and video slices and integrity of the entire first video service.

In an optional embodiment, after at least one audio/video slice is determined by performing a combining operation, an average value of sizes of all audio and video slices directly determined based on the two groups of uplink request messages may be calculated, and then a size of an audio/video slice obtained through combining may be corrected by using the average value. However, this embodiment of this application is not limited thereto.

In an optional embodiment, before the determining, by the first device, a quantity of data blocks received between a first group of uplink request messages and a second group of uplink request messages in the at least two groups of uplink request messages, the method further includes:
determining, by the first device, whether an audio and a video of the first video service are separated; and
the determining, by the first device, a quantity of data blocks received between a first group of uplink request messages and a second group of uplink request messages in the at least two groups of uplink request messages includes:
   when the audio and the video of the first video service are separated, determining, by the first device, the quantity of the data blocks received between the first group of uplink request messages and the second group of uplink request messages in the at least two groups of uplink request messages.

Specifically, the first device may first determine whether the audio and the video of the first video service are separated, and when the audio and the video of the first video service are separated, the first device determines the quantity of the data blocks received between the first group of uplink request messages and the second group of uplink request messages. It should be understood that when the audio and the video are not separated, there is definitely a data block between every two uplink request messages, and there is no group of uplink request messages. Therefore, the first device may directly determine the data block received between every two uplink request messages as an audio/video slice.

In an optional embodiment, the method further includes:
when the audio and the video of the first video service are not separated, determining, by the first device, a data block received between every two adjacent uplink request messages in the plurality of uplink request messages as an audio/video slice.

In an optional embodiment, the determining, by the first device, whether an audio and a video of the first video service are separated includes:
determining, by the first device, whether at least two consecutively sent uplink request messages exist in the plurality of uplink request messages; and
if determining that at least two consecutively sent uplink request messages exist in the plurality of uplink request messages, determining, by the first device, that the audio and the video of the first video service are separated; or
if determining that at least two consecutively sent uplink request messages do not exist in the plurality of uplink request messages, determining, by the first device, that the audio and the video of the first video service are not separated.

Specifically, the first device may determine, based on whether at least two consecutively sent uplink request messages exist in the plurality of uplink request messages, whether the audio and the video of the first video service are separated. The first device may determine, in a plurality of manners, whether at least two consecutively sent uplink request messages exist in the plurality of uplink request messages. For example, the first device may determine, based on whether same fields of the plurality of uplink request messages are continuous, whether at least two consecutively sent uplink request messages exist. However, this embodiment of this application is not limited thereto.

In an optional embodiment, the determining, by the first device, whether at least two consecutively sent uplink request messages exist in the plurality of uplink request messages includes:
obtaining, by the first device, a first field in each of the plurality of uplink request messages, where the first field is used to identify each uplink request message; and
if at least two uplink request messages whose first fields are continuous exist in the plurality of uplink request messages, determining, by the first device, that at least two consecutively sent uplink request messages exist in the plurality of uplink request messages; or
if at least two uplink request messages whose first fields are continuous do not exist in the plurality of uplink request messages, determining, by the first device, that at least two consecutively sent uplink request messages do not exist in the plurality of uplink request messages.

Specifically, the first device may determine, based on whether first fields used to identify the uplink request messages are continuous, whether at least two consecutively sent uplink request messages exist. It should be understood that any field that can play a role of identification can be used to determine whether uplink request messages are consecutively sent. In an implementation, the first field may be an ID field in an IP header or a SeqNo field in a QUIC header. This embodiment of this application is not limited thereto.

In an optional embodiment, the method further includes:
determining, by the first device, a size of a first data block that is in the plurality of data blocks and that is corresponding to a first uplink request message in the plurality of uplink request messages;
when the audio and the video of the first video service are separated, if the size of the first data block is less than a second threshold, determining, by the first device, a size of a second data block that is in the plurality of data blocks and that is corresponding to a second uplink request message in the plurality of uplink request messages; and
if the size of the second data block is less than the second threshold, determining, by the first device, a third data block that is in the plurality of data blocks and that is corresponding to a third uplink request message in the plurality of uplink request messages as an initial audio/video slice.

In an optional embodiment, the method further includes:
if the size of the second data block is greater than or equal to the second threshold, determining, by the first device, the second data block as an initial audio/video slice.

In an optional embodiment, the method further includes:
if the size of the first data block is greater than or equal to the second threshold, determining, by the first device, the first data block as an initial audio/video slice.

In an optional embodiment, the method further includes:
when the audio and the video of the first video service are not separated, if the size of the first data block is less than the second threshold, determining, by the first device, the second data block as an initial audio/video slice.

Specifically, the first device can recognize the initial audio/video slice of the first video service based on a size of at least one data block. Because the plurality of uplink request messages are corresponding to the plurality of data blocks, the first data block can be determined based on the first uplink request message in the plurality of uplink request messages. The first device first determines whether the size of the first data block is less than the second threshold. If the size of the first data block is greater than the second threshold, the first device may directly determine the first data block as the initial audio/video slice. If the size of the first data block is less than or equal to the second threshold, the first device may determine the second data block based on the second uplink request message, and determine whether the size of the second data block is less than the second threshold. If the size of the second data block is greater than the second threshold, the first device may directly determine the second data block as the initial audio/video slice. If the size of the second data block is less than or equal to the second threshold, the first device may determine the third data block that is corresponding to the third uplink request message as the initial audio/video slice.

It should be understood that the foregoing method mainly aims to filter out an index slice other than an audio/video slice. The index slice includes related index information of the first video service, and there is an obvious difference between sizes of the index slice and the audio/video slice. Therefore, in this embodiment of this application, the initial audio/video slice can be recognized through threshold setting.

In an optional embodiment, the method further includes:
determining, by the first device, playable duration of the audio/video slice based on a duration regularity of audio/video slices of the first video service; and
calculating, by the first device, a slice bit rate of the audio/video slice based on the playable duration of the audio/video slice and a size of the audio/video slice.

Specifically, after recognizing an audio/video slice, the first device can calculate a slice bit rate of the audio/video slice. The first device may perform reverse mapping by using a duration model, to obtain playable duration of the audio/video slice, and then divide a size of the audio/video slice by the playable duration of the audio/video slice, to obtain the slice bit rate.

It should be understood that a slice bit rate is a bit rate of an audio/video slice, the slice bit rate is a result of dividing a slice size by slice duration, a video service includes a plurality of slice bit rates, and a quantity of slice bit rates is related to video duration and slice duration.

In an optional embodiment, the method further includes:
after the first device obtains all audio/video slices of the first video service, determining, by the first device, a service-level bit rate of the first video service.

In an optional embodiment, the determining, by the first device, a service-level bit rate of the first video service includes:
determining, by the first device, traffic change rates and rate change rates of all the audio/video slices of the first video service;
when a traffic change rate of a first audio/video slice of the first video service is greater than a third threshold and a rate change rate of the first audio/video slice is greater than a fourth threshold, determining, by the first device, the first audio/video slice as a retransmitted slice; and
determining, by the first device, the service-level bit rate of the first video service based on remaining audio/video slices of all the audio/video slices other than the first audio/video slice.

Specifically, after recognizing all the audio/video slices of the first video service, the first device may calculate the service-level bit rate of the first video service. Before calculating the service-level bit rate, the first device may screen out and filter out the retransmitted slice based on a traffic change rate and a rate change rate of each audio/video slice, and then calculate the service-level bit rate based on remaining audio/video slices of all the audio/video slices other than the first audio/video slice.

It should be understood that a service-level bit rate is an overall bit rate of a video service, and the service-level bit rate is a result of a summarization process. After a duplicate slice is removed, sizes and duration of non-duplicate slices are accumulated, and then an accumulated size is divided by duration, to obtain a service-level bit rate. The method in this embodiment of this application may be used to calculate not only a bit rate of an encrypted video service but also a bit rate of a non-encrypted video service. Applicability of an algorithm is wider.

It should be further understood that this embodiment of this application may be applied to any network element device in a mobile broadband (mobile broadband, MBB), a fixed broadband (fixed broadband, FBB) network, or the Internet. The device has a capability of obtaining a user service data stream, and includes but not limited to a radio network controller (RNC) in a 3G network, a serving GPRS support node (serving GPRS support node, SGSN)/gateway GPRS support node (gateway GPRS support node, GGSN), an eNodeB in a 4G network, a serving gateway (serving GW, SGW)/packet data network gateway (packet data network gateway, PGW), and various probe devices. This embodiment of this application is not limited thereto.

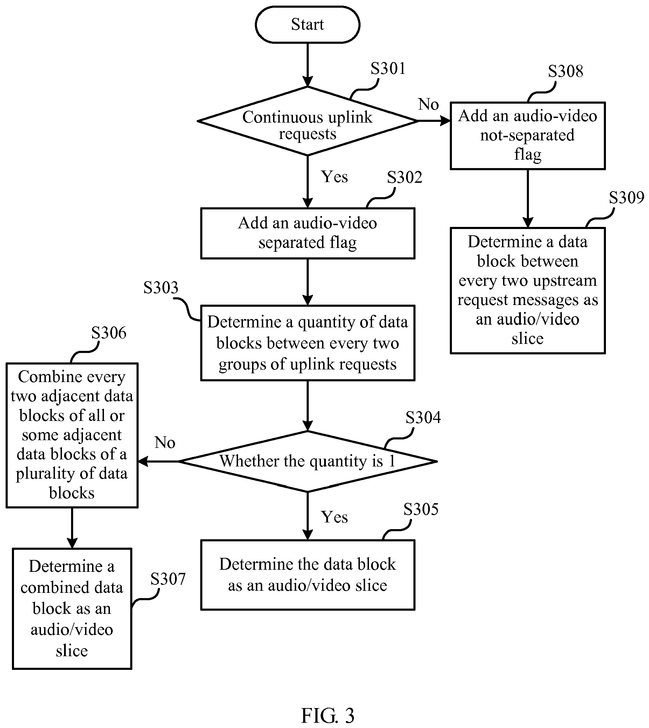

FIG. 3 is a schematic flowchart of a video service processing method 300 according to an embodiment of this application. The method 300 may be applied to a system 100 shown in FIG. 1, but this embodiment of this application is not limited thereto.

In S301, a first device determines whether a plurality of uplink request messages include at least two consecutively sent uplink request messages, where the plurality of uplink request messages are used for requesting a first video service.

In S302, if the plurality of uplink request messages include at least two consecutively sent uplink request messages, the first device adds an audio-video separated flag to the first video service.

In S303, the first device determines a quantity of data blocks received between every two groups of uplink request messages, where each group of uplink request messages includes two consecutively sent uplink request messages.

In S304, for any two consecutively sent groups of uplink request messages, whether one data block is received between the two groups of uplink request messages is determined.

In S305, if one data block is received between the two groups of uplink request messages, the first device determines the data block as an audio/video slice.

In S306, if a plurality of data blocks are received between the two groups of uplink request messages, the first device may combine every two adjacent data blocks of all or some adjacent data blocks of the plurality of data blocks sequentially, to obtain at least one combined data block.

In S307, the first device determines the at least one combined data block as at least one audio/video slice.

In S308, if the plurality of uplink request messages do not include at least two consecutively sent uplink request messages, the first device adds an audio-video not-separated flag to the first video service.

In S309, when an audio and a video of the first video service are not separated, the first device may directly determine a data block received between every two uplink request messages, as an audio/video slice.

It should be understood that sequence numbers of the foregoing processes do not mean an execution order. The execution order of the processes should be determined based on functions and internal logic of the processes, and should not be construed as any limitation on the implementation processes of this embodiment of this application.

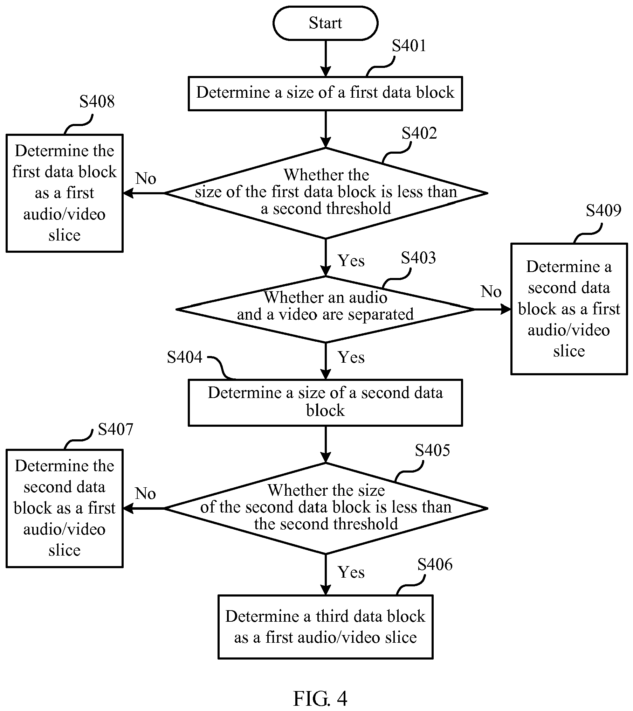

FIG. 4 is a schematic flowchart of a video service processing method 400 according to an embodiment of this application. The method 400 may be applied to a system 100 shown in FIG. 1, but this embodiment of this application is not limited thereto.

In S401, a first device determines a size of a first data block in a plurality of data blocks based on a first uplink request message in a plurality of uplink request messages.

In S402, the first device determines whether the size of the first data block is less than a second threshold.

In S403, if the size of the first data block is less than the second threshold, the first device determines whether an audio and a video of a first video service are separated.

Optionally, the first device may determine, based on whether the first video service includes an audio-video separated flag, whether the audio and the video of the first video service are separated.

In S404, if the audio and the video of the first video service are separated, the first device determines a size of a second data block in the plurality of data blocks based on a second uplink request message in the plurality of uplink request messages.

In S405, the first device determines whether the size of the second data block is less than the second threshold.

In S406, if the size of the second data block is less than the second threshold, the first device determines a third data block in the plurality of data blocks as an initial audio/video slice based on a third uplink request message in the plurality of uplink request messages.

In S407, if the size of the second data block is greater than or equal to the second threshold, the first device determines the second data block as an initial audio/video slice.

In S408, if the size of the first data block is greater than or equal to the second threshold, the first device determines the first data block as an initial audio/video slice.

In S409, if the audio and the video of the first video service are not separated, the first device determines a second data block as an initial audio/video slice.

It should be understood that sequence numbers of the foregoing processes do not mean an execution order. The execution order of the processes should be determined based on functions and internal logic of the processes, and should not be construed as any limitation on the implementation processes of this embodiment of this application.

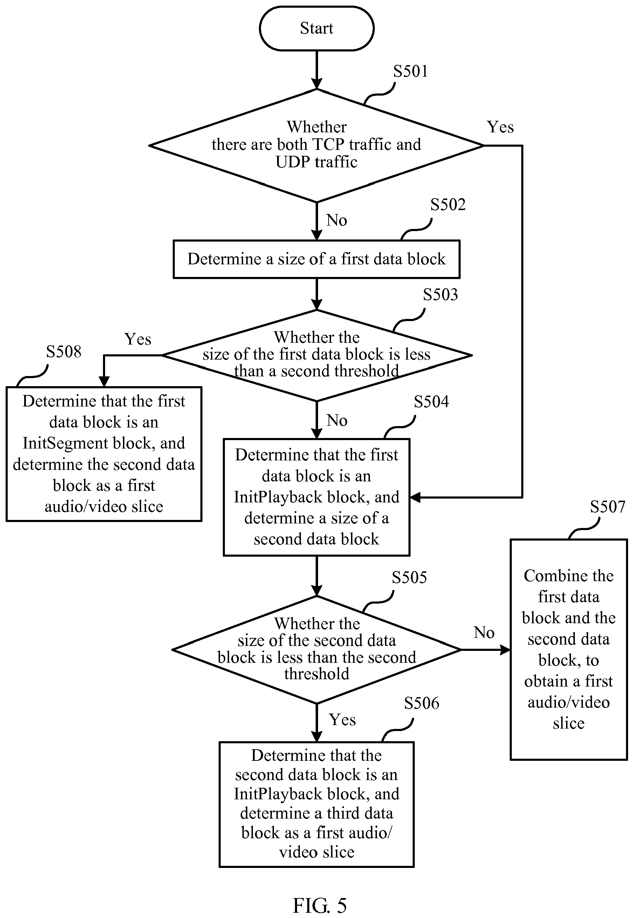

FIG. 5 is a schematic flowchart of a video service processing method 500 according to an embodiment of this application. The method 500 may be applied to a system 100 shown in FIG. 1, but this embodiment of this application is not limited thereto.

In S501, a first device determines whether there are both TCP traffic and UDP traffic in a received data block.

In S502, if only TCP traffic or only UDP traffic exists, the first device determines a size of a first data block.

In S503, the first device determines whether the size of the first data block is less than a second threshold.

In S504, if the size of the first data block is less than the second threshold, the first device may determine that the first data block is an InitPlayback block, and then determine a size of a second data block.

In S505, the first device determines whether the size of the second data block is less than the second threshold.

In S506, if the size of the second data block is less than the second threshold, the first device determines that the second data block is an InitPlayback block, and determines a third data block as an initial audio/video slice.

In S507, if the size of the second data block is greater than or equal to the second threshold, the first device combines the first data block and the second data block, and determines a combined data block as an initial audio/video slice.

In S508, if the size of the first data block is greater than or equal to the second threshold, the first device determines that the first data block is an InitSegment block and determines a second data block as an initial audio/video slice.

Specifically, the InitPlayback block is a data block that is in a Youtube video and that is transmitted from a server side to a client, and is usually of two types, where one type of data block does not include video content data and the other type of data block includes partial audio/video data of a video slice. The InitPlayback block usually varies in size from hundreds of KBs to several MBs. The InitSegment block is also a data block that is in the Youtube video and that is transmitted from the server side to the client. The InitSegment block includes playback information related to a size, duration, and the like of a video slice, and is usually of only several KBs. In this embodiment of this application, because a first slice is split before the YouTube video is transmitted, in this embodiment of this application, the first data block and the second data block need to be combined, to obtain the initial audio/video slice.

In the foregoing procedure, an entire procedure is described by using only the YouTube video as an example. Depending on a different video characteristic, the video service processing method in this embodiment of this application is slightly different. However, it should be understood that any variation made to the procedure in this embodiment of this application based on a video characteristic shall fall within the protection scope of this embodiment of this application.

The method 500 is only a method for recognizing an initial audio/video slice of a YouTube video. It should be understood that a procedure of recognizing an audio/video slice of a YouTube video is the same as that in the method 300, and details are not described herein again. In addition, a method for calculating a slice bit rate and a service-level bit rate of a YouTube video is also the same as that in the method 200, and details are not described herein again.

According to the method in this embodiment of this application, bit rates of all audio/video slices of a YouTube QUIC video can be accurately calculated, and then an accurate service-level bit rate can be obtained by using a deduplication algorithm. In a current scenario, accuracy of the obtained service-level bit rate can reach a level equal to that obtained by using the TCP protocol. Therefore, the video service processing method in this embodiment of this application may be used by a network element device to accurately assess video experience, including a mean opinion score (mean opinion score, MOS), a key quality indicator (key quality indicator, KQI), and the like.

It should be understood that sequence numbers of the foregoing processes do not mean an execution order. The execution order of the processes should be determined based on functions and internal logic of the processes, and should not be construed as any limitation on the implementation processes of this embodiment of this application.

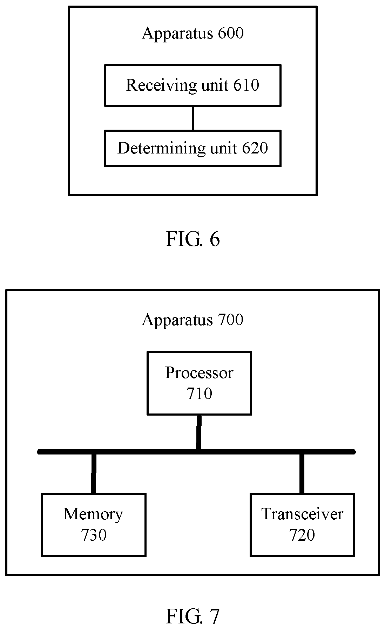

The foregoing describes in detail the video service processing method according to the embodiments of this application with reference to FIG. 1 to FIG. 6. The following describes in detail a video service processing apparatus according to embodiments of this application with reference to FIG. 6 and FIG. 7.

FIG. 6 shows a video service processing apparatus 600 according to an embodiment of this application. The apparatus 600 includes:
a receiving unit 610, configured to receive a plurality of data blocks of a first video service that are sent by a server based on a plurality of uplink request messages from a client, where the plurality of uplink request messages are used for requesting the first video service, the plurality of uplink request messages include at least two groups of uplink request messages, and each of the at least two groups of uplink request messages includes two consecutively sent uplink request messages; and
a determining unit 620, configured to determine a quantity of data blocks received between a first group of uplink request messages and a second group of uplink request messages that is adjacent to the first group of uplink request messages in the at least two groups of uplink request messages.

The determining unit 620 is further configured to: if one data block is received between the first group of uplink request messages and the second group of uplink request messages, determine the data block received between the first group of uplink request messages and the second group of uplink request messages as an audio/video slice.

The video service processing apparatus in this embodiment of this application determines an audio/video slice based on the quantity of the data blocks received between the first group of uplink request messages and the second group of uplink request messages in the at least two groups of uplink request messages, thereby recognizing an audio/video slice that is transmitted based on the QUIC protocol, and improving efficiency in recognizing an audio/video slice.

Optionally, the determining unit 620 is further configured to: if at least two data blocks are received between the first group of uplink request messages and the second group of uplink request messages, determine at least one audio/video slice based on sizes of the at least two data blocks received between the first group of uplink request messages and the second group of uplink request messages.

Optionally, the apparatus further includes a combining unit, configured to combine every two adjacent data blocks of all or some adjacent data blocks of the at least two data blocks sequentially based on a size of each of the at least two data blocks, to obtain at least one combined data block; and the determining unit 620 is specifically configured to determine the at least one combined data block as the at least one audio/video slice.

Optionally, the combining unit is specifically configured to: when a size of a first data block of the at least two data blocks is greater than a first threshold and a size of a second data block that is adjacent to the first data block and that is of the at least two data blocks is less than or equal to the first threshold, combine the first data block and the second data block.

Optionally, the determining unit 620 is further configured to: when both the sizes of the first data block and the second data block are less than or equal to the first threshold, determine a size of a third data block that immediately follows the first data block and the second data block and that is of the at least two data blocks; and
the combining unit is further configured to: when the size of the third data block is greater than the first threshold, combine the second data block and the third data block.

Optionally, the determining unit 620 is further configured to: when both the sizes of the first data block and the second data block are greater than the first threshold, determine the first data block as an audio/video slice.

Optionally, the determining unit 620 is further configured to: before determining the quantity of the data blocks received between the first group of uplink request messages and the second group of uplink request messages in the at least two groups of uplink request messages, determine whether an audio and a video of the first video service are separated; and when the audio and the video of the first video service are separated, determine the quantity of the data blocks received between the first group of uplink request messages and the second group of uplink request messages in the at least two groups of uplink request messages.

Optionally, the determining unit 620 is further configured to: when the audio and the video of the first video service are not separated, determine a data block received between every two adjacent uplink request messages in the plurality of uplink request messages as an audio/video slice.

Optionally, the determining unit 620 is further configured to: determine whether at least two consecutively sent uplink request messages exist in the plurality of uplink request messages; and if determining that at least two consecutively sent uplink request messages exist in the plurality of uplink request messages, determine that the audio and the video of the first video service are separated; or if determining that at least two consecutively sent uplink request messages do not exist in the plurality of uplink request messages, determine that the audio and the video of the first video service are not separated.

Optionally, the determining unit 620 is specifically configured to: obtain a first field in each of the plurality of uplink request messages, where the first field is used to identify each uplink request message; and if at least two uplink request messages whose first fields are continuous exist in the plurality of uplink request messages, determine that at least two consecutively sent uplink request messages exist in the plurality of uplink request messages; or if at least two uplink request messages whose first fields are continuous do not exist in the plurality of uplink request messages, determine that at least two consecutively sent uplink request messages do not exist in the plurality of uplink request messages.

Optionally, the determining unit 620 is further configured to: determine a size of a first data block that is in the plurality of data blocks and that is corresponding to a first uplink request message in the plurality of uplink request messages; when the audio and the video of the first video service are separated, if the size of the first data block is less than a second threshold, determine a size of a second data block that is in the plurality of data blocks and that is corresponding to a second uplink request message in the plurality of uplink request messages; and if the size of the second data block is less than the second threshold, determine a third data block that is in the plurality of data blocks and that is corresponding to a third uplink request message in the plurality of uplink request messages as an initial audio/video slice.

Optionally, the determining unit 620 is further configured to: if the size of the second data block is greater than or equal to the second threshold, determine the second data block as an initial audio/video slice.

Optionally, the determining unit 620 is further configured to: if the size of the first data block is greater than or equal to the second threshold, determine the first data block as an initial audio/video slice.

Optionally, the determining unit 620 is further configured to: when the audio and the video of the first video service are not separated, if the size of the first data block is less than the second threshold, determine the second data block as an initial audio/video slice.

Optionally, the determining unit 620 is further configured to: after all audio/video slices of the first video service are obtained, determine a service-level bit rate of the first video service.

Optionally, the determining unit 620 is further configured to: determine traffic change rates and rate change rates of all the audio/video slices of the first video service; when a traffic change rate of a first audio/video slice of the first video service is greater than a third threshold and a rate change rate of the first audio/video slice is greater than a fourth threshold, determine the first audio/video slice as a retransmitted slice; and determine the service-level bit rate of the first video service based on remaining audio/video slices of all the audio/video slices other than the first audio/video slice.

It should be understood that the apparatus 600 herein is embodied in a form of a functional unit. The term "unit" herein may be an application-specific integrated circuit (application-specific integrated circuit, ASIC), an electronic circuit, a processor configured to execute one or more software or firmware programs (for example, a shared processor, a proprietary processor, or a group processor) and a memory, a merged logic circuit, and/or another appropriate component that supports a described function. In an optional example, a person skilled in the art may understand that the apparatus 600 may be specifically the first device in the foregoing embodiments, and the apparatus 600 may be configured to execute each procedure and/or step corresponding to the first device in the foregoing method embodiments. To avoid repetition, details are not described herein again.

FIG. 7 shows another video service processing apparatus 700 according to an embodiment of this application. The apparatus 700 includes a processor 710, a transceiver 720, and a memory 730. The processor 710, the transceiver 720, and the memory 730 communicate with each other by using an internal connection channel. The memory 730 is configured to store an instruction. The processor 710 is configured to execute the instruction stored in the memory 730, to control the transceiver 720 to send and/or receive a signal.

The transceiver 720 is configured to receive a plurality of data blocks of a first video service that are sent by a server based on a plurality of uplink request messages from a client, where the plurality of uplink request messages are used for requesting the first video service, the plurality of uplink request messages include at least two groups of uplink request messages, and each of the at least two groups of uplink request messages includes two consecutively sent uplink request messages.

The processor 710 is configured to determine a quantity of data blocks received between a first group of uplink request messages and a second group of uplink request messages that is adjacent to the first group of uplink request messages in the at least two groups of uplink request messages.

The processor 710 is further configured to: if one data block is received between the first group of uplink request messages and the second group of uplink request messages, determine the data block received between the first group of uplink request messages and the second group of uplink request messages as an audio/video slice.

It should be understood that the apparatus 700 may be specifically the first device in the foregoing embodiments, and may be configured to execute each step and/or procedure corresponding to the first device in the foregoing method embodiments. Optionally, the memory 730 may include a read-only memory and a random access memory, and provide an instruction and data to the processor. A part of the memory may further include a nonvolatile random access memory. For example, the memory may further store device type information. The processor 710 may be configured to execute the instruction stored in the memory. In addition, when the processor 710 executes the instruction stored in the memory, the processor 710 is configured to execute each step and/or procedure corresponding to the first device in the foregoing method embodiments.

It should be understood that in this embodiment of this application, the processor in the foregoing apparatus may be a central processing unit (central processing unit, CPU), or the processor may be another general-purpose processor, a digital signal processor (DSP), an application-specific integrated circuit (ASIC), a field programmable gate array (FPGA), or another programmable logic device, a discrete gate or a transistor logic device, a discrete hardware component, or the like. The general-purpose processor may be a microprocessor, or the processor may be any conventional processor or the like.

In an implementation process, steps in the foregoing methods may be implemented by using a hardware integrated logic circuit in the processor, or by using instructions in a form of software. The steps of the method disclosed with reference to the embodiments of this application may be directly performed by a hardware processor, or may be performed by using a combination of hardware in the processor and a software unit. A software unit may be located in a mature storage medium in the art, such as a random access memory, a flash memory, a read-only memory, a programmable read-only memory, an electrically erasable programmable memory, and a register. The storage medium is located in the memory, and a processor executes instructions in the memory and completes the steps in the foregoing methods in combination with hardware of the processor. To avoid repetition, details are not described herein again.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment by functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, reference may be made to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces, indirect couplings or communications connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this application essentially, or the part contributing to the prior art, or all or some of the technical solutions may be implemented in the form of a software product. The computer software product is stored in a storage medium and includes one or more instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A video service processing method, comprising:
receiving, by a first device, a plurality of data blocks of a first video service that are sent by a server based on a plurality of uplink request messages from a client, wherein the plurality of uplink request messages are used for requesting the first video service, the plurality of uplink request messages comprise at least two groups of uplink request messages, and each of the at least two groups of uplink request messages comprises two consecutively sent uplink request messages;
determining, by the first device, a quantity of data blocks received between a first group of uplink request messages and a second group of uplink request messages that is adjacent to the first group of uplink request messages in the at least two groups of uplink request messages; and
if one data block is received between the first group of uplink request messages and the second group of uplink request messages, determining, by the first device, the data block received between the first group of uplink request messages and the second group of uplink request messages as an audio/video slice.

2. The method according to claim 1, wherein the method further comprises:
if at least two data blocks are received between the first group of uplink request messages and the second group of uplink request messages, determining, by the first device, at least one audio/video slice based on sizes of the at least two data blocks received between the first group of uplink request messages and the second group of uplink request messages.

3. The method according to claim 2, wherein the determining, by the first device, at least one audio/video slice based on sizes of the at least two data blocks received between the first group of uplink request messages and the second group of uplink request messages comprises:
combining, by the first device, every two adjacent data blocks of all or some adjacent data blocks of the at least two data blocks sequentially based on a size of each of the at least two data blocks, to obtain at least one combined data block; and
determining, by the first device, the at least one combined data block as the at least one audio/video slice.

4. The method according to claim 3, wherein the combining, by the first device, every two adjacent data blocks of all or some adjacent data blocks of the at least two data blocks sequentially based on a size of each of the at least two data blocks comprises:
when a size of a first data block of the at least two data blocks is greater than a first threshold and a size of a second data block that is adjacent to the first data block and that is of the at least two data blocks is less than or equal to the first threshold, combining, by the first device, the first data block and the second data block.

5. The method according to claim 4, wherein the method further comprises:
when both the sizes of the first data block and the second data block are less than or equal to the first threshold, determining, by the first device, a size of a third data block that immediately follows the first data block and the second data block and that is of the at least two data blocks; and
when the size of the third data block is greater than the first threshold, combining, by the first device, the second data block and the third data block.

6. The method according to claim 4 or 5, wherein the method further comprises:
when both the sizes of the first data block and the second data block are greater than the first threshold, determining, by the first device, the first data block as an audio/video slice.

7. The method according to any one of claims 1 to 6, wherein before the determining, by the first device, a quantity of data blocks received between a first group of uplink request messages and a second group of uplink request messages in the at least two groups of uplink request messages, the method further comprises:
determining, by the first device, whether an audio and a video of the first video service are separated; and
the determining, by the first device, a quantity of data blocks received between a first group of uplink request messages and a second group of uplink request messages in the at least two groups of uplink request messages comprises:
when the audio and the video of the first video service are separated, determining, by the first device, the quantity of the data blocks received between the first group of uplink request messages and the second group of uplink request messages in the at least two groups of uplink request messages.

8. The method according to claim 7, wherein the method further comprises:
when the audio and the video of the first video service are not separated, determining, by the first device, a data block received between every two adjacent uplink request messages in the plurality of uplink request messages as an audio/video slice.

9. The method according to claim 7 or 8, wherein the determining, by the first device, whether an audio and a video of the first video service are separated comprises:
determining, by the first device, whether at least two consecutively sent uplink request messages exist in the plurality of uplink request messages; and
if determining that at least two consecutively sent uplink request messages exist in the plurality of uplink request messages, determining, by the first device, that the audio and the video of the first video service are separated; or
if determining that at least two consecutively sent uplink request messages do not exist in the plurality of uplink request messages, determining, by the first device, that the audio and the video of the first video service are not separated.

10. The method according to claim 9, wherein the determining, by the first device, whether at least two consecutively sent uplink request messages exist in the plurality of uplink request messages comprises:
obtaining, by the first device, a first field in each of the plurality of uplink request messages, wherein the first field is used to identify the uplink request message; and
if at least two uplink request messages whose first fields are continuous exist in the plurality of uplink request messages, determining, by the first device, that at least two consecutively sent uplink request messages exist in the plurality of uplink request messages; or
if two uplink request messages whose first fields are continuous do not exist in the plurality of uplink request messages, determining, by the first device, that at least two consecutively sent uplink request messages do not exist in the plurality of uplink request messages.

11. The method according to any one of claims 1 to 10, wherein the method further comprises:
determining, by the first device, a size of a first data block that is in the plurality of data blocks and that is corresponding to a first uplink request message in the plurality of uplink request messages;
when the audio and the video of the first video service are separated, if the size of the first data block is less than a second threshold, determining, by the first device, a size of a second data block that is in the plurality of data blocks and that is corresponding to a second uplink request message in the plurality of uplink request messages; and
if the size of the second data block is less than the second threshold, determining, by the first device, a third data block that is in the plurality of data blocks and that is corresponding to a third uplink request message in the plurality of uplink request messages as an initial audio/video slice.

12. The method according to claim 11, wherein the method further comprises:
if the size of the second data block is greater than or equal to the second threshold, determining, by the first device, the second data block as an initial audio/video slice.

13. The method according to claim 11 or 12, wherein the method further comprises:
if the size of the first data block is greater than or equal to the second threshold, determining, by the first device, the first data block as an initial audio/video slice.

14. The method according to any one of claims 11 to 13, wherein the method further comprises:
when the audio and the video of the first video service are not separated, if the size of the first data block is less than the second threshold, determining, by the first device, the second data block as an initial audio/video slice.

15. The method according to any one of claims 1 to 14, wherein the method further comprises:
after the first device obtains all audio/video slices of the first video service, determining, by the first device, a service-level bit rate of the first video service.

16. The method according to claim 15, wherein the determining, by the first device, a service-level bit rate of the first video service comprises:
determining, by the first device, traffic change rates and rate change rates of all the audio/video slices of the first video service;
when a traffic change rate of a first audio/video slice of the first video service is greater than a third threshold and a rate change rate of the first audio/video slice is greater than a fourth threshold, determining, by the first device, the first audio/video slice as a retransmitted slice; and
determining, by the first device, the service-level bit rate of the first video service based on remaining audio/video slices of all the audio/video slices other than the first audio/video slice.

17. A video service processing apparatus, comprising:
a receiving unit, configured to receive a plurality of data blocks of a first video service that are sent by a server based on a plurality of uplink request messages from a client, wherein the plurality of uplink request messages are used for requesting the first video service, the plurality of uplink request messages comprise at least two groups of uplink request messages, and each of the at least two groups of uplink request messages comprises two consecutively sent uplink request messages; and
a determining unit, configured to determine a quantity of data blocks between a first group of uplink request messages and a second group of uplink request messages that is adjacent to the first group of uplink request messages in the at least two groups of uplink request messages, wherein
the determining unit is further configured to:
if one data block is received between the first group of uplink request messages and the second group of uplink request messages, determine the data block received between the first group of uplink request messages and the second group of uplink request messages as an audio/video slice.

18. The apparatus according to claim 17, wherein the determining unit is further configured to:
if at least two data blocks are received between the first group of uplink request messages and the second group of uplink request messages, determine at least one audio/video slice based on sizes of the at least two data blocks received between the first group of uplink request messages and the second group of uplink request messages.

19. The apparatus according to claim 18, wherein the apparatus further comprises:
a combining unit, configured to combine every two adjacent data blocks of all or some adjacent data blocks of the at least two data blocks sequentially based on a size of each of the at least two data blocks, to obtain at least one combined data block; and
the determining unit is specifically configured to:
determine the at least one combined data block as the at least one audio/video slice.

20. The apparatus according to claim 19, wherein the combining unit is specifically configured to:
when a size of a first data block of the at least two data blocks is greater than a first threshold and a size of a second data block that is adjacent to the first data block and that is of the at least two data blocks is less than or equal to the first threshold, combine the first data block and the second data block.

21. The apparatus according to claim 20, wherein the determining unit is further configured to:
when both the sizes of the first data block and the second data block are less than or equal to the first threshold, determine a size of a third data block that immediately follows the first data block and the second data block and that is of the at least two data blocks; and
the combining unit is further configured to:
when the size of the third data block is greater than the first threshold, combine the second data block and the third data block.

22. The apparatus according to claim 20 or 21, wherein the determining unit is further configured to:
when both the sizes of the first data block and the second data block are greater than the first threshold, determine the first data block as an audio/video slice.

23. The apparatus according to any one of claims 17 to 22, wherein the determining unit is further configured to:
before determining the quantity of the data blocks received between the first group of uplink request messages and the second group of uplink request messages in the at least two groups of uplink request messages, determine whether an audio and a video of the first video service are separated; and
when the audio and the video of the first video service are separated, determine the quantity of the data blocks received between the first group of uplink request messages and the second group of uplink request messages in the at least two groups of uplink request messages.

24. The apparatus according to claim 23, wherein the determining unit is further configured to:
when the audio and the video of the first video service are not separated, determine a data block received between every two adjacent uplink request messages in the plurality of uplink request messages as an audio/video slice.

25. The apparatus according to claim 23 or 24, wherein the determining unit is further configured to:
determine whether at least two consecutively sent uplink request messages exist in the plurality of uplink request messages; and
if determining that at least two consecutively sent uplink request messages exist in the plurality of uplink request messages, determine that the audio and the video of the first video service are separated; or
if determining that at least two consecutively sent uplink request messages do not exist in the plurality of uplink request messages, determine that the audio and the video of the first video service are not separated.

26. The apparatus according to claim 25, wherein the determining unit is specifically configured to:
obtain a first field in each of the plurality of uplink request messages, wherein the first field is used to identify the uplink request message; and
if at least two uplink request messages whose first fields are continuous exist in the plurality of uplink request messages, determine that at least two consecutively sent uplink request messages exist in the plurality of uplink request messages; or
if at least two uplink request messages whose first fields are continuous do not exist in the plurality of uplink request messages, determine that at least two consecutively sent uplink request messages do not exist in the plurality of uplink request messages.

27. The apparatus according to any one of claims 17 to 26, wherein the determining unit is further configured to:
determine a size of a first data block that is in the plurality of data blocks and that is corresponding to a first uplink request message in the plurality of uplink request messages;
when the audio and the video of the first video service are separated, if the size of the first data block is less than a second threshold, determine a size of a second data block that is in the plurality of data blocks and that is corresponding to a second uplink request message in the plurality of uplink request messages; and
if the size of the second data block is less than the second threshold, determine a third data block that is in the plurality of data blocks and that is corresponding to a third uplink request message in the plurality of uplink request messages as an initial audio/video slice.

28. The apparatus according to claim 27, wherein the determining unit is further configured to:
if the size of the second data block is greater than or equal to the second threshold, determine the second data block as an initial audio/video slice.

29. The apparatus according to claim 27 or 28, wherein the determining unit is further configured to:
if the size of the first data block is greater than or equal to the second threshold, determine the first data block as an initial audio/video slice.

30. The apparatus according to any one of claims 17 to 29, wherein the determining unit is further configured to:
when the audio and the video of the first video service are not separated, if the size of the first data block is less than the second threshold, determine the second data block as an initial audio/video slice.

31. The apparatus according to any one of claims 17 to 30, wherein the determining unit is further configured to:
after all audio/video slices of the first video service are obtained, determine a service-level bit rate of the first video service.

32. The apparatus according to claim 31, wherein the determining unit is further configured to:
determine traffic change rates and rate change rates of all the audio/video slices of the first video service;
when a traffic change rate of a first audio/video slice of the first video service is greater than a third threshold and a rate change rate of the first audio/video slice is greater than a fourth threshold, determine the first audio/video slice as a retransmitted slice; and
determine the service-level bit rate of the first video service based on remaining audio/video slices of all the audio/video slices other than the first audio/video slice.

33. A computer readable storage medium, configured to store a computer program, wherein when the computer program runs on a computer, the computer performs the method according to any one of claims 1 to 16.

34. A computer program product, comprising computer program code, wherein when the computer program code is run by a computer, the computer performs the method according to any one of claims 1 to 16.

35. A chip, comprising an input interface, an output interface, at least one processor, and a memory, wherein the input interface, the output interface, the processor, and the memory are connected to each other by using an internal channel, the processor is configured to execute code in the memory, and when the code is executed, the processor is configured to perform the method according to any one of claims 1 to 16.
